# EUROPEAN PATENT APPLICATION

(11) **EP 0 802 400 A1**
(43) Date of publication of application: **22.10.1997**
(21) Application number: 97302571.1
(22) Date of filing: 15.04.1997
(51) Int. Cl.: G01F 11/28

(54) **Refrigerant metering devices**

(30) Priority: 20.04.1996 GB 9608261
(71) Applicant: Hussmann (Europe) Limited, Glasgow G5 0XZ, Scotland (GB)
(72) Inventor: Rhue, James Barrington, RHU, G84 8LU, Scotland (GB)
(74) Representative: Moreland, David, Dr.

(57) **Abstract**

The invention relates to a refrigerant metering device for delivering a predetermined dose of refrigerant in liquid form to refrigeration apparatus. The refrigerant metering device comprises a container (2) having a chamber (4) capable of holding a quantity of refrigerant in excess of the dose, a first level-sensing device (L1) arranged at an upper level in the chamber (4) and a second level-sensing device (L2) arranged therein at a lower level, the amount of refrigerant containable within the volume defined between the levels being equal to the dose to be delivered, inlet means (6) and outlet means (10) for refrigerant to the chamber (4), a first valve means (SV1) adapted to close the inlet means (6) in response to a signal from the first level-sensing device (L1) and a second valve means (SV2) adapted to close the outlet means (10) in response to a signal from the second level-sensing device (L2), and a metering device (16) arranged to record a cumulative total of doses passing through the chamber (4).

## Description

The invention is concerned with improvements in or relating to refrigerant metering devices.

In the use of refrigeration equipment, it has become increasingly desirable to avoid unnecessary use or wastage of refrigerant materials. For environmental reasons, it has become more important to monitor the usage of refrigerant in such equipment, to avoid over-filling and/or the occurrence of sizeable leaks in the sometimes extensive pipework involved in the larger refrigeration plant.

Attempts have already been made to provide means which monitor the supply of refrigerant to a refrigeration system, incorporating a form of flow meter. Such a device is intended to monitor the amount of refrigerant as it is added to the refrigeration system to restore operating levels.

The use of a flow meter in these circumstances has been found to give inaccurate information, sometimes to the point of providing entirely misleading information to those attempting to maintain optimum operating conditions in the refrigeration system.

It is an object of the present invention to provide means whereby the charge of refrigerant to a refrigeration system may be more accurately monitored.

According to a first aspect of the present invention there is provided a refrigerant metering device adapted to deliver to a refrigeration apparatus a pre-determined measure or dose of refrigerant in liquid form, said device comprising a container having a chamber capable of holding a quantity of refrigerant in excess of said measure or dose, a first level-sensing device arranged at a first, upper, level in said chamber and a second level-sensing device arranged therein at a second, lower, level, the amount of refrigerant containable within the volume defined between said levels being equal to said measure or dose, inlet means and outlet means for refrigerant to said chamber, a first valve means adapted to close said inlet means in response to a signal from said first level-sensing device and a second valve means adapted to close said outlet means in response to a signal from said second level-sensing device, and a metering device arranged to record a cumulative total of measures or doses passing through said chamber.

Preferably, said cumulative total may be displayed as a permanent read-out figure. Advantageously, the device according to the invention may be provided as a permanent feature of the associated refrigeration apparatus and may be provided with means to prevent unauthorised re-zeroing of the displayed total.

It will be understood that use of a device according to the invention provides more accurate monitoring of the total liquid refrigerant supplied to a refrigeration apparatus than is possible with other forms of device hitherto used in this context. The reason for this is associated with the tendency characteristic of refrigerant liquids to become over-volatile under certain circumstances, so-called "flash-off", the result of which occurrence is to activate the mechanism of a flow meter to register an apparent through-put quite un-related to the actual quantity of liquid refrigerant charged to the system. It is then unclear to the operatives in charge of the system whether, for example, serious leaks are present or not.

According to a second aspect of the present invention there is provided a method of delivering to a refrigeration apparatus a predetermined dose of refrigerant in liquid form and for measuring the dosage delivered, the method comprising the steps of providing a container having a chamber capable of holding a quantity of refrigerant in excess of the dose, providing a first level-sensing device arranged at a first, upper, level in the chamber and a second level-sensing device arranged at a second, lower, level in the chamber such that the volume defined between the levels is equal to the dose, providing inlet means responsive to each of the first and second level-sensing devices to allow refrigerant to enter the chamber when the refrigerant level falls to the level of the second level-sensing device and to stop refrigerant entering the chamber when the refrigerant level reaches the level of the first level-sensing device, providing outlet means responsive to each of the first and second level-sensing devices to allow refrigerant to leave the chamber when the refrigerant level reaches the level of the first level-sensing device and to stop the refrigerant leaving the chamber when the refrigerant level falls to the level of the second level-sensing device, and measuring a cumulative total of doses passing through the chamber.

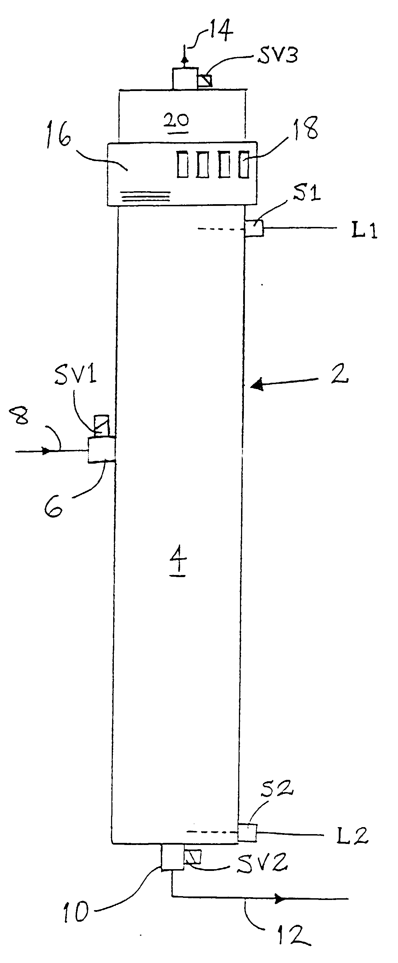

There will now be described an example of a refrigerant metering device according to the invention. It will be understood that the description, which is intended to be read with reference to the accompanying drawing, is given by way of example only and not by way of limitation.

The drawing, which is a diagrammatic representation of the layout of the example to be described, shows a container indicated at 2 having a chamber 4. A first level-sensing device S1 is provided at a first level L1 and a second level-sensing device S2 is provided at a lower level L2 in the chamber 4.

An inlet means 6 is provided in the wall of the container 2 for the input of liquid refrigerant through line 8 from the refrigerant source (not shown). An outlet means 10 is provided at the lower end of the container 2, for the outflow of liquid refrigerant through line 12 to the refrigeration system.

A bleed line 14 is provided at an upper region of the chamber 4 and also leads into the low-pressure side of the system via a solenoid valve SV3. A metering device 16 is arranged to record the number of measures or doses passing through the device and including a non-zeroing read-out panel 18 displaying a cumulative total of measures or doses.

A solenoid valve SV1 controls the inlet means 6 and a solenoid valve SV2 controls the outlet means 10. The operation of the device will now be described.

After closing the outlet of a shut-off valve on the receiver, the liquid line of the system is connected to line 12 of the present device. The device is then actuated and solenoid valve SV2 is closed as solenoid valves SV1 and SV3 open to allow refrigerant to enter the chamber which commences to fill.

When the level of refrigerant reaches level L1, a signal from level sensor S1 closes valve SV1 and SV3 and opens valve SV2. Liquid refrigerant then commences to leave the chamber 4 through the outlet means 10 and line 12 until the level of refrigerant falls to level L2. A signal from level sensor S2 then causes valve SV2 to close. Thus the amount of liquid refrigerant flowing out of the chamber 4 is that volume contained between level L1 and L2 in the chamber, which in the present example is 1 litre, although the chamber 4 itself is capable of holding more than this measure. The excess space at 20, above level L1, may fill with refrigerant in vapour form, but the operation of the device is unaffected.

Thus a measure or dose of one litre of refrigerant has been added to the main system. In the present example, the operation of sensor S1 to close the valves SV1 and SV3 and open valve SV2 also causes the metering device to register a single dose on the register and to display a new cumulative total. The device is re-set for the next operation by closing valve SV2.

A device according to the invention may be provided in a refrigeration apparatus as it is installed. The system may be filled to its normal operating capacity using the device which then registers the full operating charge of refrigerant, to which is added the additional top-up charges which are made as necessary by the operator in charge or, if preferred, by an automatic signal produced as the refrigerant in the system is reduced to a pre-determined minimum level, perhaps by leakage. Where the top-up doses are required at unusually frequent intervals or in excessively large quantities, the presence of a major leak may be suspected, and investigative and remedial steps taken.

Various modifications may be made within the scope of the invention. For example, if preferred, the two solenoid valves, SV1 and SV2 in the present example, may be replaced by an arrangement comprising a three-way valve and a non-return valve.

## Claims

1. A refrigerant metering device for delivering to a refrigeration apparatus a predetermined dose of refrigerant in liquid form, said device comprising a container (2) having a chamber (4) capable of holding a quantity of refrigerant in excess of said dose, a first level-sensing device (L1) arranged at a first, upper, level in said chamber (4) and a second level-sensing device (L2) arranged therein at a second, lower, level, the amount of refrigerant containable within the volume defined between said levels (L1,L2) being equal to said dose, inlet means (6) and outlet means (10) for refrigerant to said chamber (4), a first valve means (SV1) adapted to close said inlet means (6) in response to a signal from said first level-sensing device (L1) and a second valve means (SV2) adapted to close said outlet means (10) in response to a signal from said second level-sensing device (L2), and a metering device (16) arranged to record a cumulative total of doses passing through said chamber (4).

2. A refrigerant metering device according to claim 1, wherein said first and second valve means (SV1,SV2) are solenoid valves.

3. A refrigerant metering device according to claim 1, wherein said first and second valve means (SV1,SV2) are an arrangement comprising a three way valve and a non-return valve.

4. A refrigerant metering device according to any preceding claim, wherein said cumulative total is displayed as a permanent read-out figure.

5. A refrigerant metering device according to claim 4, further comprising means to prevent unauthorised re-zeroing of the cumulative total.

6. A method of delivering to a refrigeration apparatus a predetermined dose of refrigerant in liquid form and for measuring the dosage delivered, the method comprising the steps of providing a container (2) having a chamber (4) capable of holding a quantity of refrigerant in excess of said dose, providing a first level-sensing device (L1) arranged at a first, upper, level in said chamber (4) and a second level-sensing device (L2) arranged at a second, lower, level in said chamber (4) such that the volume defined between said levels is equal to said dose, providing inlet means (6) responsive to each of said first and second level-sensing devices (L1,L2) to allow refrigerant to enter said chamber (4) when the refrigerant level falls to the level of said second level-sensing device (L2) and to stop refrigerant entering said chamber (4) when said refrigerant level reaches the level of said first level-sensing device (L1), providing outlet means (10) responsive to each of said first and second level-sensing devices (L1,L2) to allow refrigerant to leave said chamber (4) when said refrigerant level reaches the level of said first level-sensing device (L1) and to stop the refrigerant leaving said chamber (4) when said refrigerant level falls to the level of said second level-sensing device (L2), and measuring a cumulative total of doses passing through said chamber (4).

7. A refrigeration device comprising refrigeration apparatus and the refrigerant metering device of claim 1, wherein said refrigeration apparatus is arranged to receive refrigerant from said refrigerant metering device.
